# EUROPEAN PATENT SPECIFICATION

(11) **EP 0 533 638 B1**
(45) Date of publication and mention of the grant of the patent: **09.08.1995**
(21) Application number: 92830499.7
(22) Date of filing: 16.09.1992
(51) Int. Cl.: F16L 37/18, F16L 37/10, F16B 19/02

(54) **Joint for fast connecting and disconnecting pipes**
Schnellkupplung
Raccord rapide

(30) Priority: 20.09.1991 IT MC910055
(43) Date of publication of application: 24.03.1993
(73) Proprietor: GOBBI, Gianfranco, I-60020 Agugliano (AN) (IT)
(72) Inventor: GOBBI, Gianfranco, I-60020 Agugliano (AN) (IT)
(74) Representative: Baldi, Claudio

(56) References cited:
- DE-A- 1 913 395
- US-A- 3 899 200

## Description

This patent application concerns a joint for fast connecting and disconnecting pipes consisting of a cylindrical sleeve having an ovalized opening which houses a cylindrical collar with flexible sections, characterized by an external ovalized surface conforming with the internal surface of the above opening.

The joint in question is ideal for rubber and plastic pipes with a soft and elastically pliable external surface.

Currently, the joints with sleeves used for piping generally consist of a sleeve having a truncated-conical opening whose transverse cross-section widens gradually from the entry to the inside.

A collar with flexible sections fits in this opening; the external surface of said collar is less tapered but in the same direction as the opening of the sleeve into which said collar may be fitted thanks to the elastic deformation of its sections which first bend inwards and, once they have passed the narrow entry of the opening, spontaneously open out again.

The pipe is fitted into the collar after having inserted the latter into the opening of the sleeve.

Since the internal profile of these sectors is slanted with respect to the longitudinal axis of the collar so as to envelop a truncated-conical surface whose diameter decreases axially from outwards to inwards of the sleeve, the insertion of the pipe into the collar gradually opens the above flexible sections which press against the end section of pipe inserted in the collar.

Consequently, the pipe is prevented from accidently sliding out of the joint by the interference of the above two truncated-conical surfaces; as the pipe moves backwards, it tends to pull the collar by which it is held thereby increasing the vice produced by the flexible sections of the collar which hold the pipe with an increasing pressure as the collar slides backwards into the opening of the sleeve.

The pipe can, on the other hand, be disconnected very easily and quickly simply by pushing and holding the collar completely forward with one hand and sliding the pipe out with the other, thereby overcoming the slight friction due to the hold created on the pipe by the flexible sections of the collar, which, as mentioned, had been slightly opened by the pipe when it was inserted.

The joint according to the invention is based on an absolutely different operating principle whereby the hold of the collar on the pipe is produced by the interference between the two concentric and conforming elliptic surfaces, which during the connection and disconnection of the pipe, are positioned so that their two axes of symmetry are superimposed and coincide perfectly, while when the hold of the pipe is at a maximum, the same are positioned so that their respective axes of symmetry are superimposed, but staggered by 90°, so that the larger axis of the ovalized cross-section of the collar is superimposed on the smaller axis of the ovalized cross-section of the sleeve opening.

For major clarity the description of the invention continues with reference to drawings which are intended for illustrative purposes and not in a limiting sense, whereby:
- figs. 1 and 2 are a view and a cross-section of the joint sleeve according to the invention, respectively;
- fig. 3 and 4 are a view and a cross-section of the Joint collar according to the invention, respectively;
- fig. 5 is a cross-section with an axial plane of the joint according to the invention, with sleeve and collar duly coupled and pipe inserted.

Figures 6 and 7 illustrate two further embodiments of the above collar, cross-sectioned with an axial plane.

With reference to the above figures, the joint according to the invention consists of a cylindrical sleeve (1) whose opening (1a) has an elliptic cross-section which is coupled by means of a double notch to the end opening (1b) having a smaller and perfectly circular cross-section.

The joint according to the invention also includes a collar (2) terminating at one end with a large circular handgrip flange (2c).

The transverse cross-section of the collar (2) has a perfectly circular internal profile and an ovalized external profile, conforming precisely to that of the opening (1a) of the sleeve.

The collar (2) has a number of longitudinal notches (2b) along its entire length, which are interrupted only at the end flange (2c).

These regularly spaced longitudinal notches (2b) create a number of identical elastically flexible annular sections (2d).

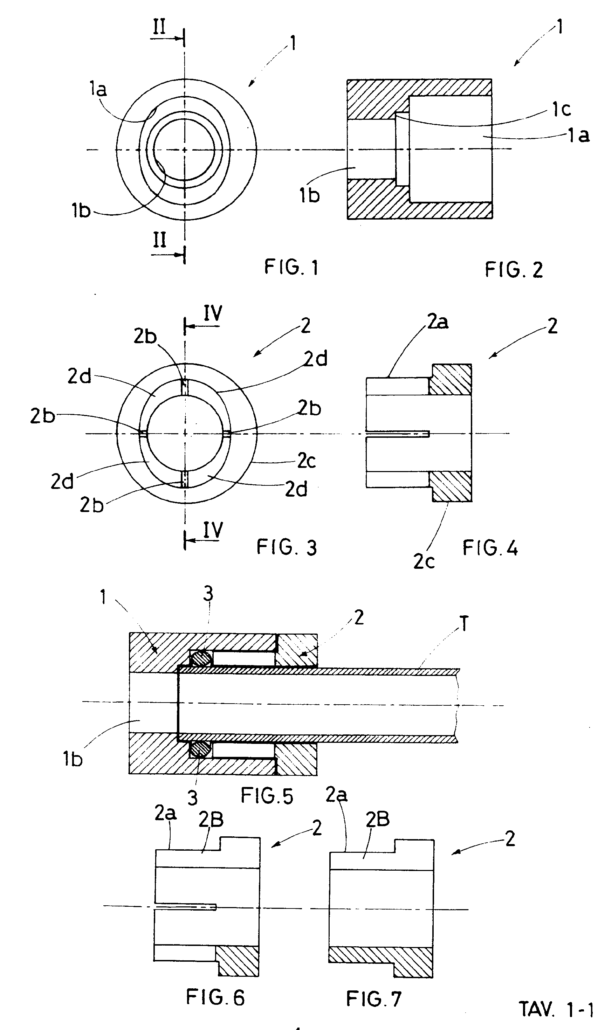

As illustrated in fig. 3, the pipe (T) is inserted into the collar (2) which is previously fitted into collar (1) as far as a shoulder (1c) on the bottom of the opening (1a) of the sleeve (1).

As can be seen, the external diameter of the pipe (T) corresponds exactly to the internal diameter of the collar (2), just as the internal diameter of the pipe (T) corresponds to the internal diameter of the end pipe (1b) of the sleeve (1).

The number (3) indicates a rubber ring which fits on pipe (T) and is pressed by the same against the internal surface of the opening (1a).

By holding the flange (2c) of the collar (2), it is possible to forcibly rotate the latter into the opening (1a) of the sleeve so that the flexible sections (2d) of the collar (2) tighten against the pipe (T) when the direction of rotation creates a gradual interference between the ovalized profiles of the external surface (2a) of the collar (2) and the internal surface of the opening (1a); obviously the greatest holding pressure will be obtained when the larger axis of the elliptic profile (2a) of the collar (2) coincides and is superimposed on the smaller axis of the elliptic opening (1a) of the sleeve (1).

Obviously, the pipe can be pulled quickly and easily out of the joint by turning the collar (2) in the sleeve (1) until there is no interference between the two above ovalized surfaces.

Fig. 6 illustrates an alternative embodiment of the joint in question, which differs from the preferred embodiment of the invention exclusively because one of the longitudinal notches (2b) of the collar (2) is a continuous notch, that is, it is not interrupted at the end handgrip flange (2c), which is therefore crossed by the continuous notch (2B).

The collar illustrated in fig. 7 has only one continuous notch (2B).

The continuous notch (2B) allows the operator to check the progressive contraction and expansion of the collar (2) as it is rotated inside the opening (1a) of the sleeve (1), so that the operator can see when it reaches the two end positions immediately: namely, the positions of maximum opening and hold.

The operator can see this immediately simply by looking at the variation of the width of the continuous notch (2B) in the section which passes the flange (1c), which is well visible from the opening (1a) of the sleeve (1).

## Claims

1. A joint for fast connecting and disconnecting pipes consisting of a cylindrical sleeve (1) having an elliptical opening (1a) and a collar (2) having a transverse cross-section with a perfectly circular internal profile and an ovalized external profile (2a), conforming precisely to that of the opening (1a) of the sleeve; the collar (2) having a series of flexible annular sections (2d) separated by longitudinal notches (2b) interrupted only at a handgrip flange (2c) having a circular profile, with which said collar (2) terminates on one side.

2. A joint for fast connecting and disconnecting pipes according to claim 1), characterized in that one (2B) of the longitudinal notches (2b) of the collar (2) is a continuous notch, that is, it is not interrupted at the end flange (2c).

## Patentansprüche

1. Rohr-Schnell-Ein-und Auskupplung, dadurch gekennzeichnet, daß sie aus einer zylindrischen Muffe (1) mit einer Einmündung (1a) eliptischen Schnitts und einem Ring (2), welcher einen Querschnitt mit einem perfekt kreisförmigen Innenprofil und ein Ovalaußenprofil (2a) aufweist, das demjenigen der Einmündung (1a) der Muffe genau entspricht, besteht, wobei der Ring (2) eine ringförmige Reihe biegsamer Segmente (2d) aufweist, die von Langseinschnitten (2b) getrennt sind, welche nur an einem Griff-Flansch (2c) mit kreisförmigem Profil unterbrochen sind, womit o.g. Ring (2) auf einer Seite endet.

2. Rohr-Schnell-Ein- und Auskupplung nach Anspruch 1), dadurch gekennzeichnet, daß einer (2 B) der Längseinschnitte des Rings (2) ein durchlaufender Einschnitt ist, d.h. am Endflansch (2c) nicht unterbrochen ist.

## Revendications

1. Joint pour tuyaux à embrayage et débrayage rapide, caractérisé en ce qu'il comprend un manchon cylindrique (1) ayant une embouchure (1a) de section elliptique et un collier (2) ayant une section transversale avec profil interne parfaitement circulaire et profil externe (2a) ovalisé, exactement conforme à celui de l'embouchure (1a) du manchon; le collier (2) supporte une série annulaire de secteurs flexibles (2d) séparés par des entailles longitudinales (2b) qui s'interrompent en proximité d'une bride qui fonctionne en tant que poignée (2c), de profil circulaire qui termine d'un côté ledit collier (2).

2. Joint pour tuyaux à embrayage et débrayage rapide, selon la revendication 1), caractérisé en ce que l'une (2B) des entailles longitudinales (2b) du collier (2) est une entaille continue, c'est à dire qu'elle n'est pas interrompue en proximité de la bride terminale (2c).
